# EUROPÄISCHE PATENTSCHRIFT

(11) **EP 0 609 272 B1**
(45) Veröffentlichungstag und Bekanntmachung des Hinweises auf die Patenterteilung: **21.08.1996**
(21) Anmeldenummer: 92921108.4
(22) Anmeldetag: 13.10.1992
(51) Int. Cl.: C02F 1/72, C02F 1/46, C02F 1/70, C02F 11/00

(54) **CHEMISCH-OXIDATIVES VERFAHREN ZUR REINIGUNG HOCHBELASTETER ABWÄSSER**
CHEMICAL OXIDATIVE PROCESS FOR PURIFYING HIGHLY CONTAMINATED WASTE WATER
PROCEDE D'EPURATION PAR OXYDATION CHIMIQUE D'EAUX RESIDUAIRES FORTEMENT CONTAMINEES

(30) Priorität: 14.10.1991 DE 4134003
(43) Veröffentlichungstag der Anmeldung: 10.08.1994
(73) Patentinhaber: Solvay Interox GmbH, D-30625 Hannover (DE)
(72) Erfinder: GNANN, Michael, D-82049 Grosshesselohe (DE); GREGOR, Carl-Heinz, B-1730 Mollem-Asse (BE); SCHELLE, Siegfried, D-8039 Puchheim (DE)
(74) Vertreter: Gosmann, Martin
(86) Internationale Anmeldenummer: EP9202357
(87) Internationale Veröffentlichungsnummer: WO9308129

(56) Entgegenhaltungen:
- DE-A- 3 832 523
- DATABASE WPI Section Ch, Week 7724, Derwent Publications Ltd., London, GB; Class D15, AN 77-42508Y
- DATABASE WPIL Section Ch, Week 8735, Derwent Publications Ltd., London, GB;
- PATENT ABSTRACTS OF JAPAN vol. 6, no. 90 (C-104)27. Mai 1982

## Beschreibung

Die Erfindung betrifft ein chemisch-oxidatives Verfahren zur Reinigung hochbelasteter Abwässer.

Es ist bekannt, durch Behandeln mit Fenton's Reagens Abwasser zu reinigen (vgl. z.B. EP-B-0 022 525; DE-C-38 32 523; H. Schwarzer, gwf-Wasser/Abwasser 129, Nr. 7 (1988), 484-491; E. Gilbert, vom Wasser 62 (1984) 307-320). Dabei werden durch chemische Oxidation die Werte CSB (chemischer Sauerstoffbedarf), BSB₅ (biochemischer Sauerstoffbedarf nach 5 Tagen), TOC (total organic carbon), TOD (total oxygen demand), AOX (an Aktivkohle absorbierbare halogenierte Kohlenwasserstoffe), aber auch organische Verbindungen, wie z.B. Phenole, Formaldehyd usw., sowie andere toxische oder hemmende anorganische Verbindungen, wie z.B. Cyanide, Schwefelverbindungen usw., umgesetzt oder eliminiert. Die Fenton-Reaktion läuft dabei im sauren Bereich unter Zugabe von Wasserstoffperoxid als Oxidans mit Eisen(II)-salzen als Katalysator ab. Bei der nachfolgenden Neutralisation fällt das gebildete Eisen(III)-hydroxid als schwerlöslicher, brauner Niederschlag aus, der durch Sedimentation (Gravitation) oder mechanische Abscheideverfahren vom behandelten Abwasser abgetrennt wird.

Es ist weiterhin bekannt, daß dieser resultierende Feststoff, als Fenton-Schlamm bezeichnet, organische Schmutzstoffe durch Adsorption an der Schlammflocke bindet. Dadurch entstehen schwerwiegende Folgeprobleme im Hinblick auf seine Behandlung und Beseitigung.

Aufgabe der vorliegenden Erfindung war es deshalb, ein Verfahren bereitzustellen, mit dem diese Folgeprobleme auf einfache Weise gelöst werden können, wobei die Fenton-Schlämme wieder aufbereitet werden können, wodurch gleichzeitig die Wiederverwendung dieser Fenton-Schlämme möglich wird. Diese Aufgabe wird mit dem Gegenstand der vorliegenden Erfindung gelöst.

Gegenstand der vorliegenden Erfindung ist ein Verfahren gemäß Patentanspruch 1 zur chemisch-oxidativen Reinigung von Abwasser mittels Fenton's Reagens durch Einwirkung von Wasserstoffperoxid und Eisen(II)-Verbindungen im sauren Bereich und nachfolgender Ausfällung der Eisen(IIII-Verbindungen im schwach sauren bis alkalischen Bereich, bei dem man den neben dem gereinigten Abwasser anfallenden Eisen(III)-haltigen Schlamm wieder zu Eisen(II) -Verbindungen reduziert und den so reduzierten Schlamm in den Prozeß zurückführt, welches dadurch gekennzeichnet ist, daß man ein hochbelastetes und/oder toxisches Abwasser, vorzugsweise ein Industrieabwasser, behandelt und daß
a) der Eisen(III)-haltige Schlamm mit dem behandelten Abwasser in einem Zwischenbehälter gespeichert wird, wobei aus dem Zwischenbehälter eine dem zulaufenden Abwasser entsprechende Menge an schlammhaltigem behandelten Abwasser abgezogen und über eine Trenneinrichtung geführt wird, aus der einerseits gereinigtes Abwasser und andererseits eingedickter Schlamm abgezogen werden, und gleichzeitig der eingedickte Eisenhydroxidschlamm aus der Trenneinrichtung dem Zwischenbehälter zugeführt wird, und die sich ergebende Schlammsuspension aus dem Zwischenbehälter in kleineren Mengen abgezogen und derart einer elektrochemischen Reduktion zugeführt wird, daß der pH-Wert vor der elektrochemischen Reduktion mit Säure auf einen pH-Wert < 1 eingestellt wird und der Eisen(III)-haltige Schlamm aufgelöst und das Eisen Fe(III) durch elektrochemische Reduktion in einer Elektrolysezelle in den zweiwertigen Zustand Fe (II) übergeführt wird und wieder der Fenton-Reaktion zugeführt wird, und wobei der pH-Wert im Reaktor im Bereich zwischen 2 und 5 liegt, und
b) das derart gereinigte, aus der Trenneinrichtung abgezogene Abwasser einer Endreinigung durch ein biologisches Reinigungsverfahren zugeführt wird.

Zweckmäßige Ausgestaltungen dieses Verfahrens sind Gegenstand der Ansprüche 2 bis 10.

Aus der DE-C-38 32 523 ist es zwar bereits bekannt, den ausgefällten eisenhaltigen Schlamm abzutrennen und in weiterem, zu behandelndem Abwasser zu suspendieren; auf diese Weise sollen die Betriebskosten des Verfahrens gesenkt werden und die Menge des eisenhaltigen Schlamms und damit von anfallendem Sonderabfall vermindert werden. Mit dieser Maßnahme lassen sich die mit der Behandlung und Beseitigung des Fenton-Schlammes auftretenden Folgeprobleme jedoch nicht zufriedenstellend lösen.

Aus der JP-A-52055256 ist weiterhin ein Verfahren zur Reinigung von Abwasser durch Behandlung mit H₂O₂ und Fe bei einem pH-Wert bis zu 10 bekannt, wobei das Fe anschließend als Hydroxid gefällt und abgetrennt wird, durch Ansäuern erneut in Lösung gebracht wird und gegebenenfalls nach chemischer Reduktion als Eisenkatalysator wiederverwertet wird. Dieses Verfahren ist zur Behandlung niedrig belasteter, insbesondere biologisch vorgereinigter Abwässer geeignet.

Die Anmelderin hat nun überraschenderweise gefunden, daß die aufgrund der Adsorption unerwünschter, insbesondere organischer Schmutzstoffe durch Adsorption an der Schlammflocke auftretenden Folgeprobleme im Hinblick auf die Behandlung und Beseitigung des Fenton-Schlammes auf zufriedenstellende Weise gelöst werden können, wenn man den neben dem gereinigten Abwasser anfallenden Eisen(III)-haltigen Schlamm durch Reduktion wieder zu Eisen(II)-Verbindungen reduziert und den so reduzierten Schlamm in den Prozeß zurückführt; dadurch wird auch eine problemlose Wiederverwendung ermöglicht.

Die Einwirkung von Wasserstoffperoxid und Eisen(II)-Verbindungen auf das zu behandelnde Abwasser im Reaktor erfolgt im pH-Bereich von 2 bis 5; als Reaktor kann dabei ein für derartige Behandlungsverfahren mit Fenton-Reagens üblicher Reaktor verwendet werden.

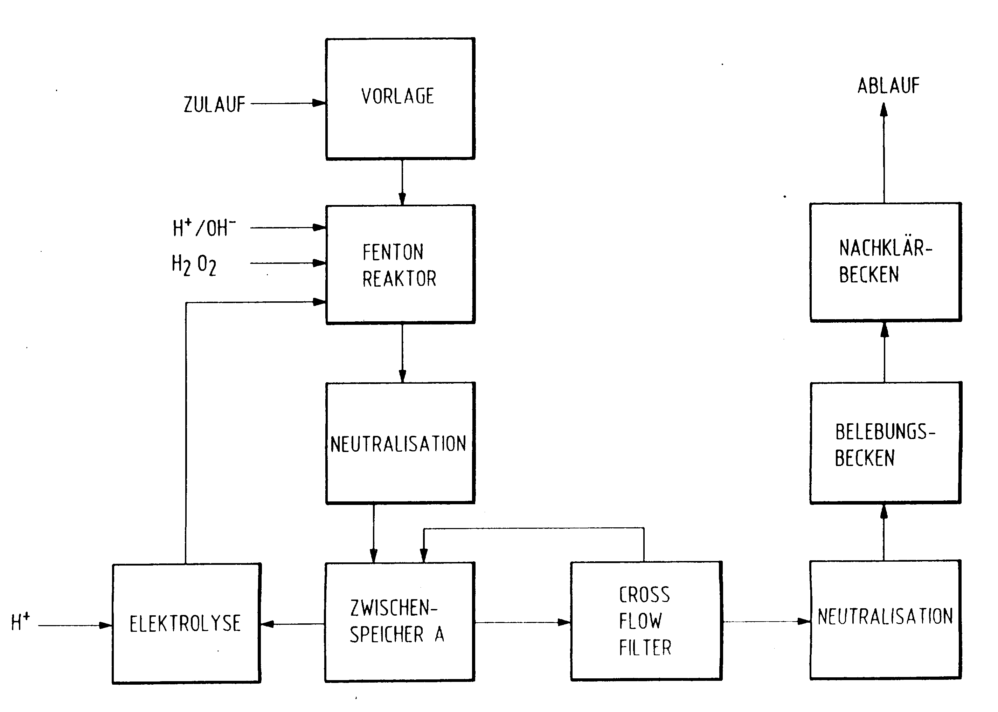

Die Figur 1 zeigt schematisch eine Ausführungsform des erfindungsgemäßen Verfahrensablaufs.

Aus einer Vorlage wird mittels einer geeigneten Fördereinrichtung, z.B. einer Zahnradpumpe, das Abwasser in den Reaktor (Fenton-Reaktor) dosiert. Weil aus der Elektrolyse eine Eisen(II)-Lösung mit einem pH-Wert von unter 1 erhalten und in den Reaktor zurückgeführt wird, ist eine Alkalizugabe (im Schema mit OH⁻ dargestellt), vorzugsweise von NaOH, erforderlich; andernfalls könnte der pH-Wert unter 2 sinken. Bei stark alkalischen Abwässern kann es gegebenenfalls aber auch erforderlich werden, die Einstellung des geeigneten pH-Wertes mittels einer Säure, vorzugsweise Schwefelsäure, vorzunehmen. Die Auswahl der geeigneten Säure zur pH-Wert-Einstellung im Reaktor und/oder für die elektrolytische Reduktion (mit einem pH-Wert von < 1) richtet sich dabei zweckmäßigerweise nach dem verwendeten Eisen-Salz (Anion).

In der nachfolgenden Verfahrensstufe der Neutralisation wird durch Alkalisierung, vorzugsweise durch NaOH-Zugabe, ein pH-Wert von 6 oder höher eingestellt. Hierbei bildet sich ein Hydroxidschlamm, der nach Abtrennung vom gereinigten Abwasser mittels einer geeigneten Tennvorrichtung der elektrochemischen Reduktion zugeführt wird. Wie in der Figur 1 dargestellt, wird das schlammhaltige Abwasser in einer nachfolgenden Stufe in einen Kreislaufbehälter (A) eingeführt, der als Zwischenspeicher dient; hier wird gleichzeitig eingedickter Eisenhydroxidschlamm aus der nachfolgenden Trennstufe (Cross-Flow-Filter → A) zugeführt und ein Schlamm der Konzentration, wie sie in A vorliegt, wird dann in kleineren Mengen als Schlammsuspension in die Elektrolyseeinrichtung (im Schema als Elektrolyse bezeichnet) geführt. In der Elektrolyseeinrichtung wird durch Ansäuern, vorzugsweise mittels Schwefelsäure, der pH-Wert auf unter 1 eingestellt unter Auflösung des Schlammes und Reduzierung von Eisen(III) zu Eisen(II) . Im Kreislaufbehälter (A) wird eine dem zulaufenden Abwasser korrespondierende Menge an schlammhaltigem behandeltem Abwasser abgezogen und über eine geeignete Trenneinrichtung, z.B. ein PE-Cross-Flow-Filter, geführt, aus der einerseits gereinigtes Abwasser und andererseits eingedickter Schlamm abgezogen werden. Die Konzentration des eingedickten Schlammes liegt demzufolge über der Konzentration im Kreislaufbehälter (A).

Als Trenneinrichtung kann anstelle des im Reaktionsschema (Figur 1) angegebenen Cross-Flow-Filters auch eine andere, für derartige Verfahren geeignete und übliche Trenneinrichtung eingesetzt werden, z.B. Zentrifugen, Filter, Dekanter, Separatoren und/oder andere übliche Vorrichtungen zur Trennung fester und flüssiger Phasen.

Die elektrochemische Reduktion von Fe(III) zu Fe(II) kann auf eine unter den Reaktionsbedingungen geeignete, an sich bekannte Weise durchgeführt werden, wie z.B. in einer Elektrolysezelle. Es können Elektrolysezellen verwendet werden, bei denen Kathode und Anode nicht voneinander getrennt sind, oder bei denen Katholyt- und Anolytraum durch ein teildurchlässiges Diaphragma oder eine Ionenaustauschermembran voneinander getrennt ist. Die durch Diaphragma oder Ionenaustauschermembran getrennte Elektrolysezelle wird vorzugsweise dann verwendet, wenn chloridhaltige Abwässer nach dem erfindungsgemäßen Verfahren behandelt werden sollen. Auf diese Weise läßt sich die unerwünschte anodische Chlor-Entwicklung vermeiden. Als Anode wird vorzugsweise eine dimensionsstabile Anode, z.B. aus platiniertem Titan oder Titan mit bekannten Beschichtungen, die Platinmetalloxide enthalten (sog. DSA-Elektroden), verwendet, und als Kathode eine aus Edelstahl, insbesondere aus Edelstahl-Streckgitter (1.24539 oder 1.4571), Kohle oder Graphit angefertigte Kathode. Als Membranen werden vorzugsweise solche verwendet, die aus perfluoriertem Kunststoff mit Sulfonsäuregruppen als funktionellen Gruppen bestehen (z.B. aus Nafion® der Firma Du Pont).

In einer erfindungsgemäßen Ausführungsform erfolgt z.B. die teilweise elektrochemische Reduktion in einer diaphragmalosen, ungeteilten Elektrolysezelle mit Kathoden aus Edelstahl, (Werkstoff Nr. 1.4539 oder 1.4571), Kohle oder Graphit und dimensionsstabilen Anoden bestehend aus platiniertem Titan oder Titan mit bekannten Beschichtungen, die Platinmetalloxide enthalten (sog. DSA-Elektroden). In einer anderen Ausführungsform, in der eine in Katholyt- und Anolytraum getrennte Elektrolysezelle verwendet wird, wird die Eisen(III)-Lösung in den Katholytraum der Elektrolysezelle eingespeist und dort teilweise oder vollständig zu Eisen(II) -Lösung reduziert, wobei Stromdichten von 100 bis 3000 A/m², bezogen auf die Projektionsfläche der Kathode, angewendet werden.

Zweckmäßigerweise beträgt die Stromdichte 100 bis 3000 A/m² Elektrodenfläche.

Die Mengen von in den Reaktor zudosiertem Wasserstoffperoxid und von der elektrochemischen Reduktion zugeführten Eisensalzen werden zweckmäßigerweise in Abhängigkeit vom CSB des zu behandelnden Abwassers gewählt. Vorzugsweise liegt das Molverhältnis CSB/H₂O₂/Fe im Bereich von 20/20/1 bis 20/10/5 und beträgt insbesondere 20/10/1.

Nach dem erfindungsgemäßen Verfahren wird das erhaltene Abwasser einer nachfolgenden biologischen Behandlung in an sich bekannter Weise zugeführt; die Figur 1 zeigt eine solche Verfahrensweise, bei der das aus der Trennvorrichtung abgezogene Abwasser gegebenenfalls nach einer Neutralisation einem Belebungsbecken und danach einem Nachklärbecken zugeführt wird.

Das erfindungsgemäße Verfahren eignet sich zur diskontinuierlichen und insbesondere zur kontinuierlichen Reinigung hochbelasteter Abwässer.

Die nachfolgenden Beispiele sollen nun die Erfindung näher erläutern, ohne sie darauf zu beschränken.

### BEISPIELE

### Beispiel 1

Aus einer Vorlage wird mittels einer Zahnradpumpe kontinuierlich das Abwasser in einen Reaktionsbehälter dosiert. Per Überlauf fließt stark saure Fe²⁺-Lösung aus der Elektrolyse in den Reaktor und mit Hilfe einer Schlauchquetschpumpe wird das für die Fenton-Reaktion nötige Wasserstoffperoxid zudosiert. Über eine pH-Steuerung (H₂SO₄, NaOH) läßt sich der gewünschte pH-Wert (zwischen 2 und 5) einstellen.

Im Alkalisierungsbehälter wird das zu Fe³⁺ abreagierte Fe²⁺ durch Zugabe von Natronlauge als Hydroxid gefällt (über eine Steuerung des pH-Wertes) und gleichzeitig überschüssiges Wasserstoffperoxid zerstört.

Die Suspension läuft dann in den Kreislaufbehälter über und wird mit dem vorgelegten Eisen(III)-hydroxid-Gemisch (z.B. 30 g Fe³⁺ /l) verrührt.

Vom Kreislaufbehälter wird mittels einer Seitenkanalpumpe und eines PE-CROSS-FLOW-Filters das behandelte Abwasser teilweise abgetrennt. Die auslaufende Menge des behandelten Abwassers (AW) kann durch ein Schrägsitzventil nach dem Filter geregelt werden.

Mit einer Schlauchquetschpumpe dosiert man aus dem Kreislaufbehälter Eisenhydroxid in einen Elektrolysebehälter, in dem es durch pH-Wert-Erniedrigung gelöst wird, und das Fe³⁺ elektrolytisch zu Fe²⁺ reduziert wird.

Das Volumen und die Konzentration des Eisenhydroxid-Schlamms im Kreislaufbehälter bleiben konstant, da sich die Menge des ablaufenden "abfiltrierten" (behandelten) Abwassers und die Menge des in den Elektrolysebehälter dosierten Eisenhydroxid-Schlamms mit der Zulaufmenge aus dem Alkalisierungsbehälter entsprechend ausgleicht.

Um in der Elektrolysezelle einen möglichst niedrigen pH-Wert (in der Regel pH < 1) zu erreichen, wird die Schwefelsäure für den Reaktor über die Elektrolyse eingeleitet. Für stark saure Abwässer gibt es noch eine Natronlauge-Dosierung in den Reaktor. Damit es trotzdem noch möglich ist, einen idealen pH-Wert in der Elektrolyse zu halten, wird die Natronlauge für den Reaktor, bezogen auf den pH-Wert, leicht "überdosiert"; bei einem stark sauren Abwasser bedingt dies eine Zudosierung von Schwefelsäure in die Elektrolyse und von Natronlauge in den Reaktor.

Die Mengen an zudosiertem Wasserstoffperoxid in den Reaktionsbehälter und von Fe-Salz in den Elektrolysebehälter werden in Abhängigkeit vom CSB-Wert des zu behandelnden Abwassers z.B. wie folgt berechnet:

| | |
|---|---|
| Vorgabe : | CSB : H₂O₂ : Fe = 20 : 10 : 1 (Molverhältnis) |
| Abwasser : | CSB = 8000 mg/l (= 500 mmol/l) |
| H₂ O₂ : | 250 mmol/l |
| Fe^{2 +} : | 25 mmol/l |

In dem vorstehend beschriebenen Verfahren wurde mit folgenden Mengen und Vorrichtungen gearbeitet:

| | |
|---|---|
| Abwasser (AW)-Durchsatz | 5 l/h |
| AW-CSB-Konzentrationen | 1000 - 12000 mg/l |
| CSB-Abbau (je nach AW) | 50 - 90 % |

| Verweilzeiten: | |
|---|---|
| Reaktor | 2 h |
| Alkalisierung | 1 h |
| Kreislaufbehälter | 3 h |

| Entstehende Reaktionstemperaturen: | |
|---|---|
| Elektrolyse (bei 6 A) | bis 45°C |
| Reaktor | bis 41°C |

Der Kreislaufbehälter wird mittels einer Kühlschlange auf ca. 20°C gekühlt.

| Einsatzstoffe und -konzentrationen: | |
|---|---|
| Natronlauge (technisch) | 50 Gew.-% |
| Schwefelsäure (technisch) | 70 Gew.-% |

Fe₂ (SO₄)₃ entwässert, technisch (Gehalt an Fe: 21,5 - 22,5 %) im Kreislaufbehälter
Konzentration angegeben als Fe³⁺ : z.B. 30 g/l (= 537 mmol/l)
- Elektrolysezelle:: aus PVC, rührbar, genutztes Volumen 1,5 l, mit Temperaturmessung versehen.
Kathode:
1.4539 Edelstahl-Streckgitter 80 cm²;
Anode:
Platin-beschichtetes Titan 10 cm² Pt Elektrodenabstand 0,5 cm
Stromverbrauch 0,024 kWh (6 A eingestellt / = 4 V)
- Reaktor :: aus PVC, rührbar, genutztes Volumen 10 l, mit Temperaturmessung und pH-Wert-Steuerung (OH⁻ direkt, H⁺ über Elektrolyse)
- Alkalisierungs- (Neutralisations)-Behälter:: aus PVC, rührbar, genutztes Volumen 5 l, mit pH-Wert-Steuerung versehen (OH⁻ direkt)
- Kreislaufbehälter:: aus PVC, rührbar, genutztes Volumen 15 l, Kühlmöglichkeit mittels Kühlschlange;
- PE-Cross-Flow-Filter:: aus Polyethylen, 50 % Porosität, 10⁻⁵ m Porengröße.

Zur besseren Verfahrensbeobachtung waren die Elektrolysezelle, der Reaktor, das Alkalisierungsgefäß und der Kreislaufbehälter durchsichtig ausgeführt.

### Beispiel 2

In einer Versuchsanlage im Technikumsmaßstab wurde nach dem im Beispiel 1 beschriebenen Verfahren hochbelastetes Industrieabwasser behandelt. Ziel der Behandlung war es, den CSB, TOC und AOX, vor allem aber die Toxizität des Abwassers zu reduzieren, um eine Endreinigung durch biologische Verfahren zu ermöglichen.

Die Daten des Rohabwassers und die nach der erfindungsgemäßen Behandlung erhaltenen Daten sind die folgenden:

| | CSB (mg/l) | n_{CSB} (%) | AOX (µg/l) | n_{AOX} (%) | TOC (mg/l) | n_{TOC} (%) | Toxizität |
|---|---|---|---|---|---|---|---|
| Rohabwasser | 4200 | | 1500 | | 1000 | | sehr hoch |
| | 7100 | | | | | | |
| | | | | | | | |
| nach Fenton | 1250 | 50 | | 60 | 85 | 500 | gering |
| Behandlung | 3120 | 70 | 215 | 96 | 620 | 50 | |

In einer nachfolgend zugeschalteten biologischen Laboranlage (System Attisholz) konnte nachgewiesen werden, daß das vorbehandelte Industrieabwasser nach kurzer Adaptionsphase des Belebtschlamms, bedingt durch die geringe Hemmwirkung, endgereinigt werden konnte, wobei Gesamtwirkungsgrade für den CSB- und TOC-Abbau von über 90 % erzielt werden konnten. Die AOX-Werte veränderten sich nach der biologischen Behandlung praktisch nicht mehr.

Das Gesamtverfahren entspricht dem Schema der Figur 1, wobei die Neutralisation vor dem Belebungsbecken nur notwendig war, wenn die Schlammfällung (nach dem Fenton-Reaktor) bei pH-Werten über 8 durchgeführt wurde.

## Patentansprüche

1. Verfahren zur chemisch-oxidativen Reinigung von Abwasser mittels Fenton's Reagens durch Einwirkung von Wasserstoffperoxid und Eisen(II)-Verbindungen im sauren Bereich und nachfolgender Ausfällung der Eisen(III)-Verbindungen im schwach sauren bis alkalischen Bereich, bei dem man den neben dem gereinigten Abwasser anfallenden Eisen(III)-haltigen Schlamm wieder zu Eisen(II)-Verbindungen reduziert und den so reduzierten Schlamm in den Prozeß zurückführt,
**dadurch gekennzeichnet,**
daß man ein hochbelastetes und/oder toxisches Abwasser, vorzugsweise ein Industrieabwasser, behandelt und daß
a) der Eisen(III)-haltige Schlamm mit dem behandelten Abwasser in einem Zwischenbehälter gespeichert wird, wobei aus dem Zwischenbehälter eine dem zulaufenden Abwasser entsprechende Menge an schlammhaltigem behandelten Abwasser abgezogen und über eine Trenneinrichtung geführt wird, aus der einerseits gereinigtes Abwasser und andererseits eingedickter Schlamm abgezogen werden, und gleichzeitig der eingedickte Eisenhydroxidschlamm aus der Trenneinrichtung dem Zwischenbehälter zugeführt wird, und die sich ergebende Schlammsuspension aus dem Zwischenbehälter in kleineren Mengen abgezogen und derart einer elektrochemischen Reduktion zugeführt wird, daß der pH-Wert vor der elektrochemischen Reduktion mit Säure auf einen pH-Wert < 1 eingestellt wird und der Eisen(III)-haltige Schlamm aufgelöst und das Eisen Fe(III) durch elektrochemische Reduktion in einer Elektrolysezelle in den zweiwertigen Zustand Fe (II) übergeführt wird und wieder der Fenton-Reaktion zugeführt wird, und wobei der pH-Wert im Reaktor im Bereich zwischen 2 und 5 liegt, und
b) das derart gereinigte, aus der Trenneinrichtung abgezogene Abwasser einer Endreinigung durch ein biologisches Reinigungsverfahren zugeführt wird.

2. Verfahren nach Anspruch 1,
**dadurch gekennzeichnet,**
daß man Abwasser mit AW-CSB-Konzentrationen von 1000 bis 12.000 mg/l behandelt.

3. Verfahren nach Anspruch 1,
**dadurch gekennzeichnet,**
daß als Säure Schwefelsäure verwendet wird.

4. Verfahren nach einem der Ansprüche 1 bis 3,
**dadurch gekennzeichnet,**
daß die Trennung von fester und flüssiger Phase durch Filter, Zentrifugen, Dekanter oder Separatoren erfolgt.

5. Verfahren nach Anspruch 1,
**dadurch gekennzeichnet,**
daß die teilweise elektrochemische Reduktion in einer diaphragmalosen, ungeteilten Elektrolysezelle mit Kathoden aus Edelstahl (Werkstoff Nr. 1.4539 oder 1.4571), Kohle oder Graphit und dimensionsstabilen Anoden bestehend aus platiniertem Titan oder Titan mit bekannten Beschichtungen, die Platinmetalloxid enthalten (sog. DSA-Elektroden), durchgeführt wird.

6. Verfahren nach Anspruch 1,
**dadurch gekennzeichnet,**
daß die Elektrolyse-zelle eine solche ist, in der die Katholyt- und Anolyträume durch ein teildurchlässiges Diaphragma oder durch eine Ionenaustauschermembran voneinander getrennt sind.

7. Verfahren nach Anspruch 1 oder 6,
**dadurch gekennzeichnet,**
daß die Membran der Elektrolysezelle aus perfluoriertem Kunststoff mit Sulfonsäuregruppen als funktionellen Gruppen besteht.

8. Verfahren nach einem der Ansprüche 1, 6 oder 7,
**dadurch gekennzeichnet,**
daß die Eisen(III) -Lösung in den Katholytraum der Elektrolysezelle eingespeist wird und dort teilweise oder vollständig zu Eisen(II)-Lösung reduziert wird, wobei Stromdichten von 100 bis 3000 A/m², bezogen auf die Projektionsfläche der Kathode, angewendet werden.

9. Verfahren nach einem der Ansprüche 1 bis 8,
**dadurch gekennzeichnet,**
daß das Molverhältnis CSB/H₂O₂/Fe im Bereich von 20/20/1 bis 20/10/5 liegt.

10. Verfahren nach Anspruch 9,
**dadurch gekennzeichnet,**
daß das Molverhältnis CSB/H₂O₂/Fe = 20/10/1.

## Claims

1. Process for the chemical oxidative purification of effluent by means of Fenton's reagent by the effect of hydrogen peroxide and iron(II) compounds in the acid range and subsequent precipitation of the iron(III) compounds in the slightly acid to alkaline range, characterised in that the iron (III)-containing sludge which is obtained apart from the purified effluent is reduced to iron(II) compounds and the sludge thus reduced is recycled into the process, characterised in that a highly polluted and/or toxic effluent, preferably an industrial effluent, is treated and that
(a) the iron(III)-containing sludge is stored together with the treated effluent in a buffer tank, a quantity of sludge-containing treated effluent corresponding to the effluent introduced being withdrawn from the buffer tank and passed via a separating facility from which, on the one hand, purified effluent and, on the other hand, thickened sludge is withdrawn and the thickened iron hydroxide sludge is simultaneously passed form the separating facility to the buffer tank and the resulting sludge suspension is withdrawn in smaller quantities from the buffer tank and passed to an electrochemical reduction in such a way that the pH is adjusted with acid to a pH of <1 before the electrochemical reduction and the iron(III)-containing sludge is dissolved and the iron Fe(III) is converted by electrochemical reduction in an electrolytic cell into the divalent state Fe(II) and recycled into the Fenton reaction, the pH in the reactor being in the range between 2 and 5 and
(b) the effluent purified in this way and withdrawn from the separating facility is passed to a final purification by means of a biological purification process.

2. Process according to claim 1 characterised in that effluent with an effluent COD concentration of 1000 to 12,000 mg/l is treated.

3. Process according to claim 1 characterised in that sulphuric acid is used as the acid.

4. Process according to one of claims 1 to 3 characterised in that the separation of the solid and liquid phase is achieved by means of filters, centrifuges, decanters or separators.

5. Process according to claim 1 characterised in that the partially electrochemical reduction is carried out in an undivided electrolytic cell without a diaphragm, with cathodes of stainless steel (material no. 1.4539 or 1.4571), carbon or graphite and dimensionally stable anodes consisting of platinised titanium or titanium with known coatings which contain platinum metal oxides (so-called DSA electrodes).

6. Process according to claim 1 characterised in that the electrolytic cell is of the type in which the catholyte and anolyte chambers are separated from each other by a partially permeable diaphragm or by an ion exchanger membrane.

7. Process according to claim 1 or 6 characterised in that the membrane of the electrolytic cell consists of perfluorinated polymer with sulphonic acid groups as functional groups.

8. Process according to one of claims 1, 6 or 7 characterised in that the iron(III) solution is fed into the catholyte chamber of the electroyltic cell and partially or completely reduced to iron(II) solution there, current densities of 100 to 3000 A/m² in relation to the projection surface of the cathode being used.

9. Process according to one of claims 1 to 8 characterised in that the molar ratio of COD:H₂O₂:Fe is in the range of 20:20:1 to 20:10:5.

10. Process according to claim 9 characterised in that the molar ratio of COD:H₂O₂:Fe = 20:10:1.

## Revendications

1. Procédé d'épuration par oxydation chimique d'eaux résiduaires au moyen du réactif de Fenton par l'action de peroxyde d'hydrogène et de composés du fer (II) en milieu acide et par précipitation subséquente des composés du fer (III) en milieu faiblement acide à basique, dans lequel on réduit de nouveau la boue contenant du fer (III) obtenue avec les eaux résiduaires purifiées en composés du fer (II) et on recycle la boue ainsi réduite dans le procédé, caractérisé en ce qu'on traite des eaux résiduaires fortement contaminées et/ou toxiques, de préférence des eaux résiduaires industrielles et en ce que
a) la boue contenant du fer (III) est stockée dans un réservoir intermédiaire avec l'eau résiduaire traitée, étape pendant laquelle on prélève du réservoir intermédiaire une quantité d'eau résiduaire traitée, contenant de la boue, correspondant à celle de l'eau résiduaire d'alimentation et on passe celle-ci par un dispositif de séparation, duquel on prélève d'une part de l'eau résiduaire purifiée et d'autre part une boue épaissie, et, en même temps, la boue épaissie d'hydroxyde de fer provenant du dispositif de séparation est acheminée vers le réservoir intermédiaire et la suspension de boue résultante est prélevée du réservoir intermédiaire par petites quantités et acheminée vers une réduction électrochimique, de telle manière que le pH est réglé à une valeur de pH < 1 avec de l'acide avant la réduction électrochimique, que la boue contenant du fer (III) est dissoute, que le fer Fe (III) est transformé en un état divalent Fe (II) par réduction électrochimique dans une cellule d'électrolyse et qu'il est de nouveau acheminé vers la réaction de Fenton, le pH dans le réacteur se situant dans la gamme entre 2 et 5, et
b) l'eau résiduaire ainsi purifiée, prélevée du dispositif de séparation, est acheminée vers une purification finale par un procédé de purification biologique.

2. Procédé selon la revendication 1, caractérisé en ce qu'on traite de l'eau résiduaire avec des concentrations DCO de l'eau résiduaire de 1.000 à 12.000 mg/l.

3. Procédé selon la revendication 1, caractérisé en ce qu'on utilise de l'acide sulfurique à titre d'acide.

4. Procédé selon les revendications 1 à 3, caractérisé en ce que la séparation de la phase solide et de la phase liquide est effectuée à l'aide de filtres, de centrifugeuses, de décanteurs ou de séparateurs.

5. Procédé selon la revendication 1, caractérisé en ce que la réduction partiellement électrochimique est effectuée dans une cellule d'électrolyse non-divisée et sans diaphragme, avec des cathodes en acier inoxydable (matériau No. 1.4539 ou 1.4571), en charbon ou en graphite et avec des anodes dimensionnellement stables, constituées de titane platiné ou de titane avec des revêtements connus qui contiennent un oxyde de platine métallique (des électrodes dites électrodes de type DSA).

6. Procédé selon la revendication 1, caractérisé en ce que la cellule d'électrolyse est une cellule dans laquelle les compartiments cathodique et anolytique sont séparés l'un de l'autre par un diaphragme semi-perméable ou par une membrane d'échange ionique.

7. Procédé selon la revendication 1 ou 6, caractérisé en ce que la membrane de la cellule électrolytique est constituée d'une matière synthétique perfluorée avec des groupes d'acide sulfonique à titre de groupes fonctionnels.

8. Procédé selon l'une des revendications 1, 6 ou 7, caractérisé en ce que la solution de fer (III) est introduite dans le compartiment cathodique de la cellule d'électrolyse et en ce qu'elle y est réduite partiellement ou totalement en solution de fer (II), en appliquant des densités de courant de 100 à 3.000 A/m², rapportées à la surface de projection de la cathode.

9. Procédé selon l'une des revendications 1 à 8, caractérisé en ce que le rapport molaire DCO/H₂O₂/Fe se situe dans la gamme de 20/20/1 à 20/10/5.

10. Procédé selon la revendication 9, caractérisé en ce que le rapport molaire DCO/H₂O₂/Fe vaut 20/10/1.
